# EUROPEAN PATENT APPLICATION

(11) **EP 1 645 489 A1**
(43) Date of publication of application: **12.04.2006**
(21) Application number: 04425798.8
(22) Date of filing: 25.10.2004
(51) Int. Cl.: B62D 21/20

(54) **Device for loading and transporting goods comprising a frame**

(30) Priority: 08.10.2004 WO PCT/IT20/04000560
(71) Applicant: Carrozzeria Pezzaioli S.r.l., 25018 Montichiari (Brescia) (IT)
(72) Inventor: Pezzaioli, Giorgio, 25018 Montichiari Brescia (IT)
(74) Representative: Crippa, Paolo Ernesto

(57) **Abstract**

A moveable device (1) for goods loading and transport that is suitable for joining to a vehicle, comprising a frame (2) and strengthening means that act operatively together with said frame (2) to increase the mechanical characteristics of said frame. In particular, said strengthening means comprise a plurality of aluminium plates (12), which are set longitudinally covering the longitudinal frame members (4,6) of the frame and welded together and connected to the longitudinal frame members by bolts or nails (14), interacting with the respective bushes (16) by means of pulling.

## Description

. The present invention relates to a device for goods transport suitable for being joined to a vehicle. In particular, the present invention relates to a trailer or semi-trailer comprising a frame.

. A trailer or semi-trailer for a vehicle for transporting goods generally comprises a frame made up of two longitudinal frame members, which are generally realised in steel, to which the wheels of the trailer are connected.

. On the upper part, the frame is covered with a wooden structure to realise the goods supporting surface.

. To realise an overall lighter structure, trailers or semi-trailers are also realised with aluminium longitudinal frame members, naturally running into increased costs as a result of the raw materials used.

. The solutions known today however present some disadvantages. Amongst other things it is necessary to foresee suitable measuring of the longitudinal frame members of the frame, which constitute the only supporting, and therefore resistant elements of the frame.

. It is the object of the present invention to overcome the problems stated with reference to the prior art.

**.** This object is achieved with the device realised in keeping with claim 1. The claims depending on this describe executable variations.

**.** The characteristics and advantages of the device according to the present invention will be appreciated from the description reported below of an embodiment, given by way of example, which is not limiting, in keeping with the accompanying figures, wherein:

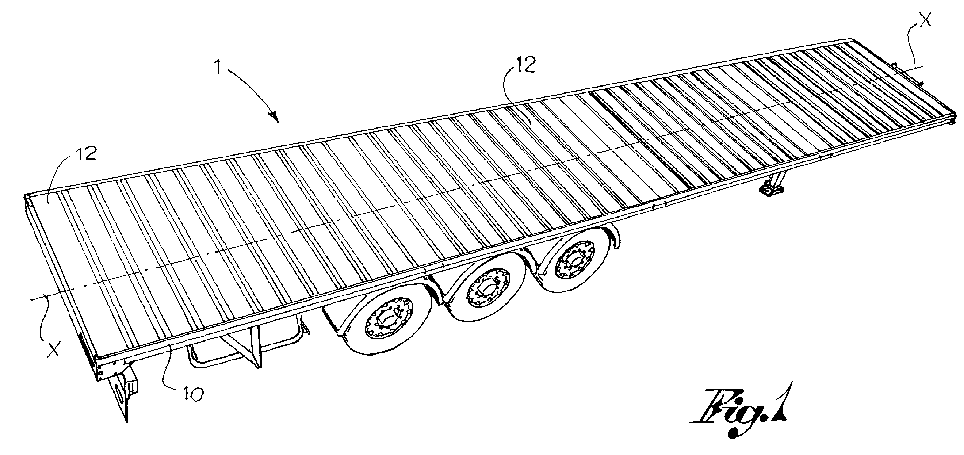

. - figure 1 shows a three-dimensional view from above of the device according to the present invention, in one embodiment;

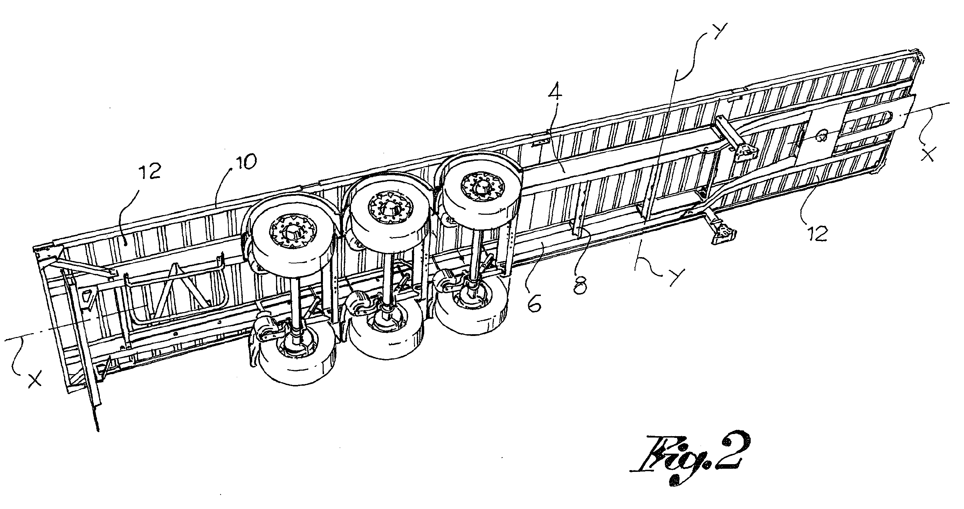

. - figure 2 represents a three-dimensional view from the bottom of the device in figure 1;

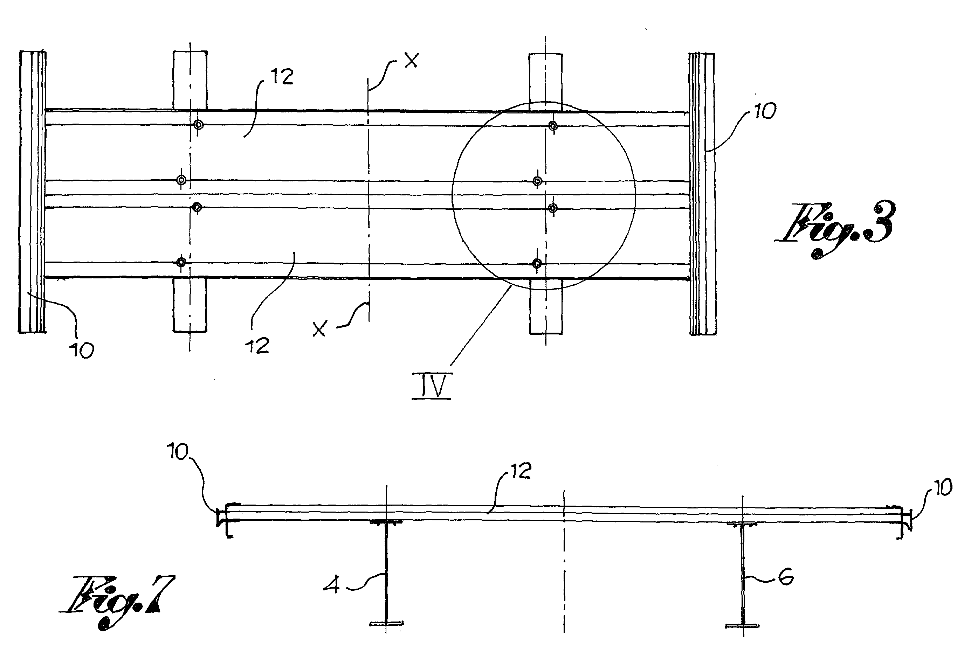

. - figure 3 shows a top view from above of a portion of the device;

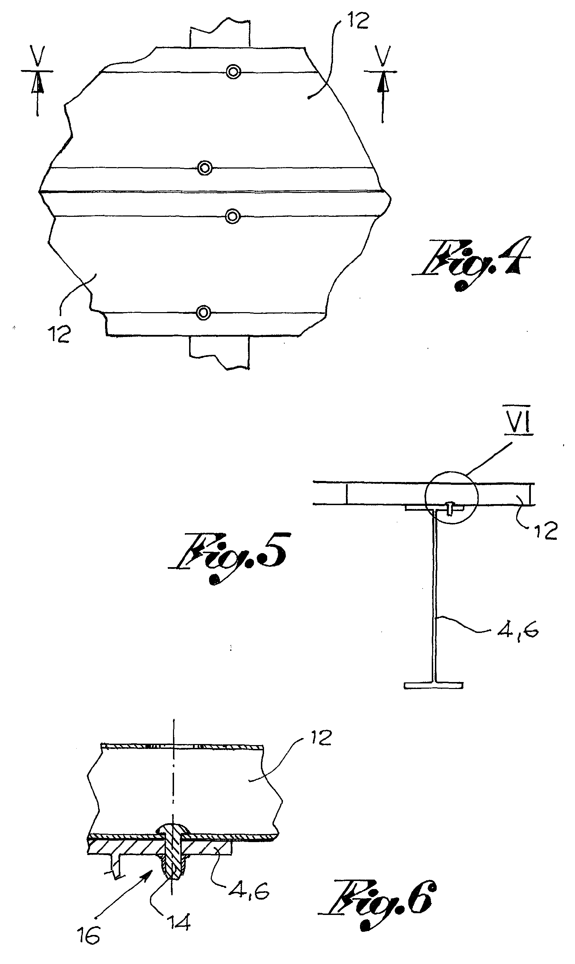

. - figure 4 represents an enlarged view of detail IV in figure 3;

. - figure 5 shows a section view according to the V-V line in figure 4;

. - figure 6 represents an enlarged view of detail VI in figure 5, and

**.** - figure 7 shows a front view of the portion of the device in figure 3.

. In keeping with the accompanying figures, a device for goods loading and transport suitable for being joined to a vehicle, for example a tractor, lorry and the like is wholly indicated with reference 1.

. The device 1 comprises a frame 2, with an extension prevalently along an X-X frame axis that is suitable for carrying said goods.

. According to a preferred embodiment, said frame 2 comprises at least one longitudinal frame member, in other words a supporting longitudinal element, with an extension prevalently along said X-X frame longitudinal axis.

. Said frame 2 preferably comprises two transversally spaced longitudinal frame members 4, 6.

. According to a preferred embodiment, said frame also comprises at least one crosspiece 8, with an extension prevalently along a transversal Y-Y axis perpendicular to said longitudinal X-X axis, suitable for connecting said longitudinal frame members 4, 6.

. Moreover, according to a preferred embodiment, said frame 2 comprises an outer peripheric structure 10 connected to said longitudinal frame members with an essentially rectangular layout. Said outer structure defines the extension of a supporting surface of the frame.

. According to a preferred embodiment, said outer structure is realised by means of extrusion.

. The frame is suitable for being operatively connected to means for moving said device. Said moving means comprise at least one axle and at least one wheel.

. According to a preferred embodiment, said frame is realised in steel. Said longitudinal frame members are preferably realised in steel.

. Moreover, said device comprises connecting means suitable for connecting said device to said vehicle.

. The device 1 also comprises strengthening means that act together operatively with said frame, said strengthening means being suitable for increasing the mechanical characteristics of said frame.

. In other words, said device comprises strengthening means that lend their mechanical characteristics to the frame, thus strengthening it.

. According to a preferred embodiment, said strengthening means comprise at least one plate 12 suitable for being placed over said frame.

. Said plate is preferably made of metal material, preferably aluminium or aluminium alloy.

**.** According to a preferred embodiment, said strengthening means comprise a plurality of said plates 12, set longitudinally side by side and arranged along said X-X frame longitudinal axis to cover it.

**.** According to a preferred embodiment, said plates are realised by means of extrusion.

. Said plates 12 are preferably connected to realise said longitudinal sequence by means of welding.

**.** Said strengthening means are also suitable for supporting said goods, since they realise a base placed upon the frame that is suitable for supporting said goods.

. According to a preferred embodiment, said outer structure 10 of the frame 2 is connected directly to said plates 12 of the strengthening means.

. Said device 1 preferably also comprises fastening devices suitable for operatively connecting said strengthening means to said frame.

**.** In particular, said fastening means operate diffusely along said X-X frame longitudinal axis with said frame.

. Said fastening means preferably comprise an adhesive substance suitable for gluing said plates to said longitudinal frame members.

**.** Moreover, according to a preferred embodiment, said fastening means comprise at least one bolt or nail 14, which is suitable for crossing said plate 12 and acting together and a portion of said longitudinal frame member 4, 6 of the frame 2.

. Said fastening means also comprise a compass 16 suitable for acting with said bolt 14 to connect the frame to the strengthening means.

. Said compass 16 and said bolt 14 preferably act together by a "pulling" mechanism.

. In other words, said bolt or nail 14 presents a stem with a corrugated portion suitable for interfering with the compass on a level with its inner diameter.

. Innovatively, the above described transport and loading device overcomes the disadvantages stated with reference to the prior art.

. In particular, said device allows the steel longitudinal frame members of the frame to be measured with lower thicknesses, since strengthening means are foreseen generally along said frame, acting together in its supporting role.

. Also advantageously, the strengthening means simultaneously realise the rest base for the goods, thus avoiding the introduction of additional elements, for example in wood into the structure.

. According to an additional advantageous aspect, said strengthening means act together with the longitudinal frame members along their whole longitudinal extension.

**.** Also advantageously said aluminium plates present a transversal extension that contributes to defining the mechanical characteristics of the structure.

. According to an additional advantageous aspect, the aluminium plates act together with the longitudinal frame members to increase the mechanical resistance of said longitudinal frame members. In other words, part of the tensions that would weigh on said longitudinal frame members are in fact absorbed and supported by the plates.

**.** According to an additional advantageous aspect, connecting the plates to the frame is quick and easy.

. Clearly, an expert in the field can make numerous variations and modifications to the above described device, all of which are contained in the scope of protection as defined by the following claims in order to satisfy specific, contingent needs.

## Claims

1. Moveable device (1) for goods loading and transport suitable for being joined to a vehicle, wherein said device comprises:
- a frame (2), with a prevalent extension along a frame longitudinal axis (X-X), suitable for being operatively connected to means for moving said device, said frame being suitable for carrying said goods;
said device being **characterised in that** it also comprises strengthening means, which act together with said frame (2), said strengthening means being suitable for increasing the mechanical characteristics of said frame.

2. Device according to claim 1, wherein said strengthening means act together with said frame generally along said longitudinal axis.

3. Device according to claim 1 or 2, wherein said strengthening means comprise at least one plate (12) that is suitable for being positioned above said frame (2).

4. Device according to claim 3, wherein said plate is made of different material from the material used for the frame.

5. Device according to claim 4, wherein said plate is made of aluminium or its alloys.

6. Device according to any one of the claims from 3 to 5, wherein said strengthening means comprise a plurality of plates (12) set longitudinally side by side to realise a supporting surface for the device (1).

7. Device according to claim 6, wherein said plates are interconnected by welding.

8. Device according to any one of the previous claims, wherein said strengthening means are also suitable for supporting said goods.

9. Device according to claim 8, wherein said strengthening means realise a supporting surface to support said goods.

10. Device according to any one of the previous claims, also comprising fastening means that are suitable for operatively connecting said strengthening means to said frame.

11. Device according to claim 10, wherein said fastening means act generally along said frame longitudinal axis (X-X).

12. Device according to claim 11, wherein said fastening means comprise an adhesive substance suitable for gluing said strengthening means to said frame.

13. Device according to any one of the claims from 10 to 12, wherein said fastening means comprise at least one bolt or nail (14) suitable for crossing a plate (12) of said strengthening means and acting together with a portion of a longitudinal frame member (4,6) of said frame (2).

14. Device according to claim 13, wherein said hooking means comprise a compass (16) suitable for acting together with said bolt (16) to connect the frame to the strengthening means.

15. Device according to claim 14, wherein said compass (16) and said bolt (14) act together by means of a "pulling" system.

16. Device according to any one of the previous claims, wherein said frame comprises at least one longitudinal frame member with a prevalent extension along said frame longitudinal axis (X-X).

17. Device according to claim 16, wherein said frame comprises two transversally spaced longitudinal frame members (4,6).

18. Device according to any one of the previous claims, wherein said frame comprises at least one crosspiece (8) with a prevalently transversal extension that is suitable for connecting said longitudinal frame members (4,6).

19. Device according to claim 17 or 18, wherein said frame comprises an outer structure, which defines the surface extension of the supporting surface of the device.

20. Device according to claim 19, wherein said outer structure is connected directly to plates (12) of said strengthening means.

21. Device according to any one of the previous claims, wherein said device can be moved by wheels.
